# EUROPEAN PATENT APPLICATION

(11) **EP 1 906 416 A2**
(43) Date of publication of application: **02.04.2008**
(21) Application number: 07018970.9
(22) Date of filing: 26.09.2007
(51) Int. Cl.: H01G 9/20

(54) **Photoelectric conversion device and method of manufacturing photoelectric conversion device**

(30) Priority: 28.09.2006 JP 2006265221
(71) Applicant: TDK Corporation, Tokyo 103-8272 (JP)
(72) Inventor: Shinkai, Masahiro, Tokyo 103-8272 (JP); Tanabe, Junji, Tokyo 103-8272 (JP); Tsuchiya, Masahiro, Tokyo 103-8272 (JP); Shinohara, Hidenori, Tokyo 103-8272 (JP); Monden, Atsushi, Tokyo 103-8272 (JP)
(74) Representative: Müller - Hoffmann & Partner

(57) **Abstract**

Provided is a photoelectric conversion device having a simple structure including a plurality of end-face incident type photoelectric conversion cells. A plurality of dye-sensitized unit cells are disposed on folded faces of the metal sheet that is in a folded form. In these unit cells, a light which comes from a lateral end face of a stacked structure of each unit cell is photoelectrically converted. The manufacturing process of a soar cell is simplified in comparison with the case that a plurality of end-face incident type photoelectric conversion cells are merely placed in a plane.

## Description

### BACKGROUND OF THE INVENTION

### 1. Field of the Invention

The present invention relates to a photoelectric conversion device composed through a use of dye, and a method of manufacturing such a photoelectric conversion device.

### 2. Description of the Related Art

A dye-sensitized solar cell using dye as a photosensitizer has been known as a solar cell converting light energy such as sunlight into electrical energy. This dye-sensitized solar cell can be manufactured in a low cost and large scale facilities are unnecessary therefor, in comparison with a solar cell using a silicon semiconductor that has been generally spread. Thus, the dye-sensitized solar cell has been attracted attention as a solar cell in the next generation, and the development has been in progress for a practical use. (For example, Japanese Unexamined Patent Publication No. Hei-1-220380, Japanese Unexamined Patent Publication No. Hei-5-504023, Japanese Unexamined Patent Publication (Translation of PCT Application) No. 2002-512729 and Japanese Unexamined Patent Publication No.2003-308891)

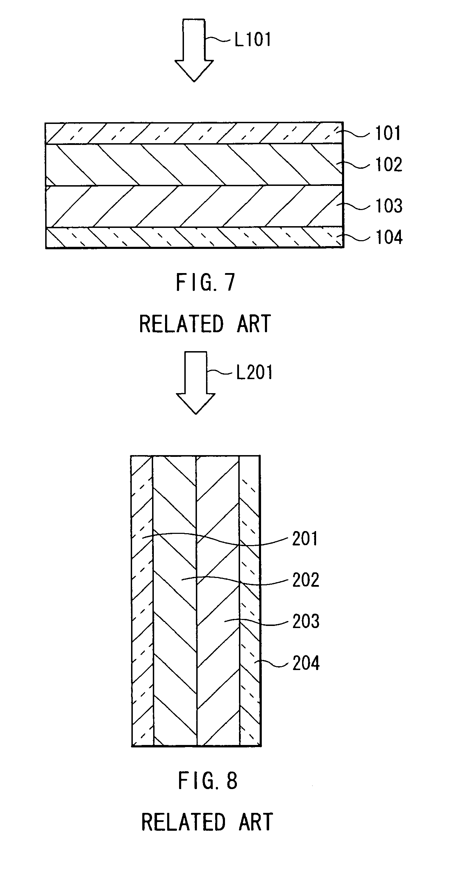

Generally, the dye-sensitized solar cell generates electricity using a characteristic of dye that absorbs light and releases an electron. The dye-sensitized solar cell has a feature of having an electrochemical cell structure via an electrolytic solution. Specifically, for example as shown in Fig.7, the dye-sensitized solar cell has a porous structure that an oxide such as titanium dioxide (TiO₂) is baked on a transparent electrode 101. Also, a transparent electrode 104 as an opposing electrode is attached to a layer that has been subjected to an adsorption of dye (an oxide layer 102) via an electrolytic solution 103. In such a configuration, when the dye that has absorbed a light L101 releases an electron, this electron is injected from the oxide and travels between the transparent electrodes 101 and 104. On the other hand, in the electrolytic solution 103, oxidation-reduction reaction is repeated; thereby photoelectric conversion is executed constantly.

In the dye-sensitized solar cell of the related art, as show in Fig.7, the light comes along the stacking direction (plane incident). In this case, the cell is necessary to be large in order to obtain a large amount of electric power; thereby a large set up area is demanded.

For example, in Japanese Unexamined Patent Publication No.2005-93406, such a dye-sensitized solar cell is proposed that a light (a light L201) comes from an end face (end face incident) of transparent electrodes 201 and 204, an oxide layer 202 and an electrolytic solution 203, as shown in Fig.8.

### SUMMARY OF THE INVENTION

According to Japanese Unexamined Patent Publication No.2005-93406, if a cell is adapted to be large along the light incident direction, it is thought that a large amount of electric power can be obtained even in a small set up area. However, when such an end-face incident type unit cell is plurally arranged in a plane, there arises a problem that the manufacturing process becomes complicated. Accordingly, because the extraction structure of the electrode becomes complicated, the set up area for the extraction structure is necessary to be large, and an amount of electric power cannot be fully increased for per unit area.

In view of the foregoing, it is desirable to provide a method of manufacturing a photoelectric conversion device capable of easily obtaining the photoelectric conversion device including a plurality of end-face incident type photoelectric conversion cells.

It is further desirable to provide a photoelectric conversion device capable of increasing an amount of photoelectric conversion per unit area.

A photoelectric conversion device according to an embodiment of the present invention has a conductive sheet in a folded form, and a plurality of dye-sensitized photoelectric conversion cells disposed to have a stacked structure on folded faces of the conductive sheet and photoelectrically converting a light which comes from the lateral end face of the stacked structure.

According to the photoelectric conversion device in an embodiment of the present invention, a plurality of dye-sensitized photoelectric conversion cells are disposed on the folded faces of the conductive sheet that is in the folded form. In the cells, the light which comes from the lateral end face of the stacked structure is photoelectrically converted, respectively.

In the photoelectric conversion device according to an embodiment of the present invention, a plurality of conductive patterns are preferably formed on the abovementioned conductive sheet. In such a configuration, the extraction structure of the electrode from each of the photoelectric conversion cells is simplified. In this case, on the conductive pattern, an oxide layer, dye held by the oxide layer, an electrolyte layer, and an opposing electrode may be stacked in this order, and the abovementioned photoelectric conversion cell may be composed of the oxide layer, the dye, the electrolyte layer and the opposing electrode. In such a configuration, the light which comes from the lateral end face of the stacked structure of each of the photoelectric conversion cells is absorbed in the dye. The dye absorbing the light releases the electron. This electron is injected from the oxide layer, and conducted via the conductive pattern as a positive electrode. And then the electron travels to the opposing electrode as a negative electrode. On the other hand, in the electrolyte layer, with the travel of the electron between the opposing electrode and the conductive pattern, the oxidation-reduction reaction is repeated. Accordingly, the electron travels successively in the opposing electrode, the conductive pattern and the electrolyte; thereby the photoelectric conversion is executed constantly.

In the photoelectric conversion device according to an embodiment of the present invention, a light guide plate is preferably disposed in the stacking direction of each of the photoelectric conversion cells, and leading the incident light which comes from the lateral end face of the light guide plate into each of the photoelectric conversion cells. In such a configuration, in comparison with the case of the light which comes from the lateral end face of the stacked structure of the photoelectric conversion cell, a large amount of light is led into the photoelectric conversion cell by the light guide plate in order to be used for the photoelectric conversion. Accordingly, use efficiency of an external light is improved. In this case, a reflection film reflecting the incident light is more preferably provided on the faces of the light guide plate except for the incident face through which the abovementioned incident light comes, and the light guide face through which the incident light is led into the photoelectric conversion cell. In such a configuration, the incident light to the light guide plate is led into the photoelectric conversion cell without leakage; thereby the photoelectric conversion efficiency with respect to the incident light is improved.

In the photoelectric conversion device according to an embodiment of the present invention, the conductive sheet can, for example, be configured to be folded in a zigzag form.

A method of manufacturing the photoelectric conversion device according to an embodiment of the present invention includes the steps of forming a plurality of conductive patterns on an insulating sheet, forming the oxide layer divided into a plurality of regions on the conductive pattern, supporting dye on each of the oxide layers, disposing the opposing electrode above each of the oxide layers with an electrolyte layer in between, and folding the insulating sheet on which the conductive pattern is formed.

According to the photoelectric device of an embodiment of the present invention, a plurality of dye-sensitized photoelectric conversion cells are disposed on the folded faces of the conductive sheet folded in the folded form, and the light which comes from the lateral end face of the stacked structure of each of the photoelectric conversion cells are photoelectrically converted. Thus, the manufacturing process of the photoelectric conversion device can be simplified in comparison with the case that merely placing a plurality of such end-face incident type photoelectric conversion cells. Therefore, the photoelectric conversion device including a plurality of end-face incident type photoelectric conversion cells can be easily obtained.

In particular, in case the conductive sheet is composed of a plurality of conductive patterns connecting between same electrodes or between different electrodes of two photoelectric conversion cells, the extraction structure of the electrode from each of the photoelectric conversion cells can be simplified. Accordingly, the set up area for the extraction structure of the electrode can be decreased; thereby an amount of photoelectric conversion per unit area can be enhanced in comparison with the related art.

The method of manufacturing the photoelectric conversion device according to an embodiment of the present invention includes the steps of forming a plurality of conductive patterns on the insulating sheet, forming the oxide layer divided into a plurality of regions on the conductive pattern, supporting dye on each of the oxide layers, disposing the opposing electrode above each of the oxide layers with an electrolyte layer in between, and folding the insulating sheet on which the conductive pattern is formed. Thus, the manufacturing process of the photoelectric conversion device can be simplified in comparison with the case that merely placing a plurality of end-face incident type photoelectric conversion cells. Therefore, the photoelectric conversion device including a plurality of end-face incident type photoelectric conversion cells can be easily obtained.

Other and further objects, features and advantages of the invention will appear more fully from the following description.

### BRIEF DESCRIPTION OF THE DRAWINGS

Fig.1 is a perspective view showing the overall configuration of a solar cell as a photoelectric conversion device according to an embodiment of the present invention.
Fig.2 is a cross sectional view showing the detailed configuration of a unit cell indicated in Fig.1.
Fig.3 is an enlarged cross sectional view showing a portion I indicated in Fig.2.
Figs.4A to 4C are schematic views illustrating the connection relationship of a plurality of unit cells.
Fig.5 is a perspective view showing the overall configuration of a solar cell as a photoelectric conversion device according to a modification of the present invention.
Fig.6 is a cross sectional view showing the configuration of a battery cell in the solar cell as the photoelectric conversion device according to the modification of the present invention.
Fig.7 is a cross sectional view showing the configuration example of a solar cell of the related art.
Fig.8 is a cross sectional view showing another configuration example of the solar cell of the related art.

### DETAILED DESCRIPTION OF THE PREFERRED EMBODIMENT

Hereinafter, a preferred embodiment of the present invention (simply referred to as an embodiment, hereinafter) will be described in detail with reference to the accompanying drawings.

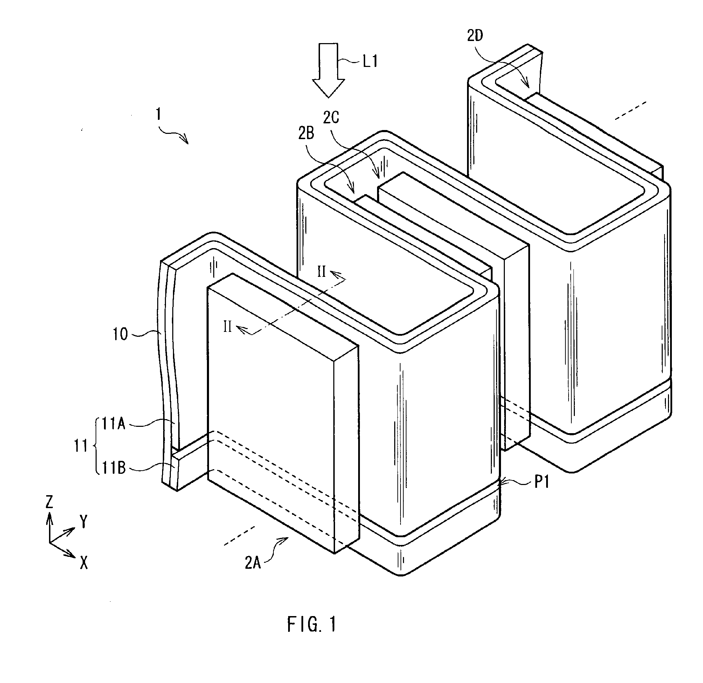

Fig.1 shows the overall configuration of a solar cell (a solar cell 1) as a dye-sensitized photoelectric conversion device according to an embodiment of the present invention. The solar cell 1 has an insulating sheet 10, a metal sheet 11, and a plurality of dye-sensitized unit cells 2A to 2D.

The insulating sheet 10 has a configuration to be folded in a zigzag form, and has folded faces each forming a Z-X plane which extends along the Y-axis direction (referred to as a Z-X folded face, hereinafter) and folded faces each forming a Y-Z plane and connecting the Z-X folded faces (referred to as a Y-Z folded face). The insulating sheet 10 is composed of high polymer material such as polyethylene terephthalate (PET), and its thickness is, for example, from 10 µm to 500 µm.

The metal sheet 11 is formed on one side of the insulating sheet 10 to be folded in the zigzag form in the same way as the insulating sheet 10. The metal sheet 11 is provided with an opening pattern P1 similarly folded in the zigzag form; thereby the metal sheet 11 is divided into two conductive patterns (conductive patterns 11A and 11B in order along the positive direction of the Z-axis) along the Z-axis direction. The opening pattern P1 is provided downwardly of the metal sheet 11; thereby the area of the conductive pattern 11A is larger than the area of the conductive pattern 11B. The metal sheet 11 is composed of metal such as steel use stainless (SUS), nickel (Ni), copper (Cu), or aluminum (Al), or composed of alloy thereof. Its thickness is, for example, from 1 µm to 100 µm.

The unit cells 2A to 2D are disposed on the Z-X folded faces of the metal sheet 11, respectively. The unit cells 2A to 2D have a stacked structure as will be described later. The unit cells 2A to 2D are end-face incident type cells photoelectrically converting a light L1 which comes (end-face incident) from the end face (the upper end face forming an X-Y plane) of the stacked structure. In Fig.1, four unit cells 2A to 2D are shown, but a number of unit cells is not limited to this.

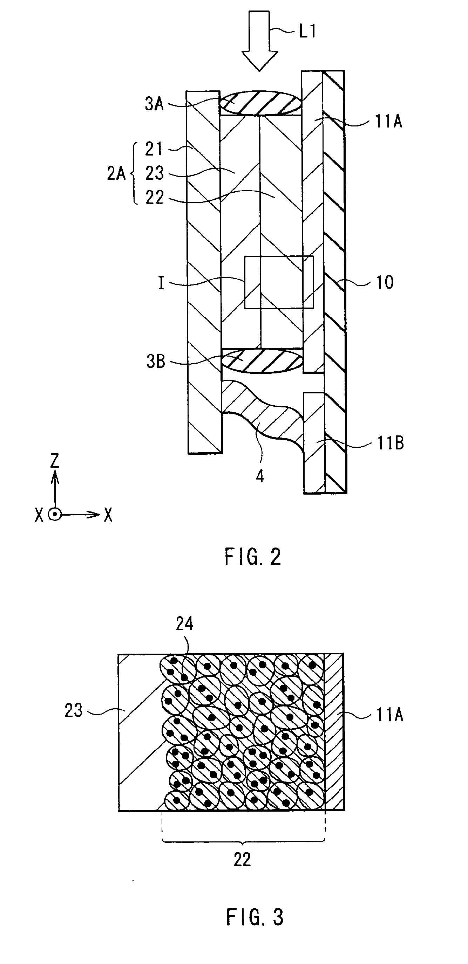

Fig.2 shows the cross sectional configuration as viewed from the direction of the line II - II of Fig.1, and indicates the cross sectional configuration of the unit cell 2A, the conductive patterns 11A and 11B, the insulating sheet 10 and the like. On the conductive pattern 11A, an oxide layer 22 holding a dye 24 described later, an electrolytic solution layer 23 and an opposing electrode 21 are formed in this order. The unit cell 2A is composed of the oxide layer 22, the dye 24, the electrolytic solution layer 23 and the opposing electrode 21. As will be described later, between the conductive pattern 11A operating as a positive electrode with respect to an external circuit and the opposing electrode 21 operating as a negative electrode, disposed are a pair of spacers 3A and 3B composed of transmissible material (for example, acrylic resin and the like) of the light L1 that comes from the lateral end face; thereby the positive electrode and negative electrode are supported by the spacers 3A and 3B disposed therebetween. On the other hand, the conductive pattern 11B is electrically connected to the opposing electrode 21 by a connection portion 4 of conductive paste or the like.

The oxide layer 22 is, for example, composed of oxide semiconductor such as zinc oxide (ZnO) and titanium oxide (TiO₂), and its thickness is, for example, from 1 µm to 100 µm. The oxide layer 22 may be composed of a combination of two or more types of oxide semiconductors, and may be a dope layer or un-dope layer.

Fig.3 shows a portion I of Fig.2 in an enlarged scale. As seen from Fig.3, the oxide layer 22 has a porous structure with a large specific surface area so that the dye 24 is adsorbed on the vicinity of the surface. The dye 24 is, for example, the dye having a feature of absorbing the light in a visible light region and an infrared region. The dye can necessarily be adsorbed in the oxide layer 13 so that it preferably includes, in the dye molecule, carboxyl group, anhydride carboxylic acid group, alkoxy group, hydroxyl group, hydroxyl alkyl group, sulfonic acid group, ester group, mercapto group, phosphonil group and the like. Specifically, for example, used are ruthenium (Ru) metal complex, azo type dye, quinone type dye, quinonimin type dye, quinacridone dye, squarylium type dye, cyanin type dye, merocyanin type dye, triphenylmethane type dye, xanthine type dye, polyphenyl type dye, phthalocyanine type dye, perylene type dye, indigo type dye and the like. Because the oxide semiconductor composing the oxide layer 22 hardly absorbs the light L1, the dye 24 functions as the photosensitizer to increase the absorption wavelength region of the light L1, and the dye 24 has a feature of releasing an excited electron by absorbing the light L1.

The electrolytic solution layer 23 is composed of the electrolytic solution impregnated between the opposing electrode 21 and the oxide layer 22. The electrolytic solution includes an ion as an oxidation-reduction couple. As the electrolytic solution, for example, mixed solution of iodine and iodine compounds, and mixed solution of bromine and bromide compounds can be used, and for example, zinc halide such as zinc chloride, zinc bromide or zinc iodide, or solution including zinc nitrate or zinc perchlorate is preferably used. The oxidation-reduction coupled ion included in the electrolytic solution layer 23 repeatedly performs oxidation reaction in the negative electrode (the opposing electrode 21 as described later) and reduction reaction in the positive electrode (the conductive pattern 11A as described later). Accordingly, successive travel of an electron occurs; thereby photoelectric conversion can be executed constantly.

The opposing electrode 21 is composed of reflectable material with respect to the light L1 that comes from the lateral end face. For example, they are metal such as SUS, nickel, copper (Cu) or aluminum (Al), or alloy including these, and its thickness is, for example, from 1 µm to 100 µm. The opposing electrode 21 is configured to be reflectable of the light L1 so that the light L1 can be reflected and led to the dye 24 side without leakage. In addition, the opposing electrode 21 can be composed of indium tin oxide (ITO) or fluorine doped tin oxide (FTO) on the optional face of an electrode having a transparency (for example, a substrate having a light transmission characteristic such as transparent resin, glass, or the like) with respect to the light L1.

Here, the metal sheet 11 corresponds to a specific example of a "conductive sheet" of the present invention. The unit cells 2A to 2D correspond to a specific example of a "photoelectric conversion cell" of the present invention. The conductive patterns 11A and 11B correspond to a specific example of "a plurality of conductive patterns" of the present invention.

The solar cell 1 as the photoelectric conversion device can, for example, be manufactured in the following way.

First, on the insulating sheet 10 of the abovementioned material, the metal sheet 11 of the abovementioned material is, for example, formed using vapor evaporation method, sputtering method, affixing a foil, or the like. The opening pattern P1 is formed of, for example, CO₂ laser or the like so that the metal sheet 11 has the configuration to be divided into the two conductive patterns 11A and 11B. In addition, the metal sheet 11 having the two conductive patterns 11A and 11B may be formed on the insulating sheet 10 from the beginning.

Next, in a predetermined position on the conductive pattern 11A, that is, in the position where the unit cells 2A to 2D will be disposed, the oxide layer 22 of the abovementioned material is, for example, selectively formed using electrolytic deposition, spray method, screen printing or the like.

Next, the dye 24 of the abovementioned material is adsorbed on each of the already-formed oxide layers 22. Specifically, the dye 24 is dissolved in the solution of organic solvents such as methanol, and the oxide layer 22 is immersed in the solution.

Next, the conductive pattern 11A as the positive electrode and the opposing electrode 21 as the opposing electrode (negative electrode) are stacked with the oxide layer 22 in between. The electrolytic solution of the abovementioned material is impregnated between the opposing electrode 21 and the oxide layer 22 that are stacked so that the electrolytic solution layer 23 is formed.

Next, between the conductive pattern 11A and each of the opposing electrodes 21, a pair of spacers 3A and 3B of the abovementioned material are disposed; thereby supporting between the positive and negative electrodes, and closely holding the electrolytic solution layer 23. A connection portion 4 of the abovementioned material electrically connects between the opposing electrode 21 and the conductive pattern 11B. Accordingly, a plurality of dye-sensitized unit cells 2A to 2D are formed on the insulating sheet 10 and the metal sheet 11.

Finally, the insulating sheet 10 and the metal sheet 11 where a plurality of unit cells 2A to 2D are formed are folded in the zigzag form as shown in Fig.1. Thus, the unit cells 2A o 2D are disposed on the Z-X folded faces of the metal sheet 11, respectively. In this way, the solar cell 1 in Figs.1 to 3 is manufactured.

According to the solar cell 1 as the photoelectric conversion device of the present embodiment, in a plurality of dye-sensitized unit cells 2A to 2D, the light L1 that comes from the lateral end face of the stacking structure thereof is photoelectrically converted, respectively. Specifically, the light L1 that comes form the lateral end face of the stacked structure of each photoelectric conversion cell is transmissive through the spacer 3A. Then the light L1 is absorbed by the dye 24 held by the oxide layer 22, and erects the electron in the dye 24. The erected electron is injected in a conductor of the oxide layer 22, and then is transmitted to the conductive pattern 11A as the positive electrode located adjacent to the oxide layer 22. It finally reaches the opposing electrode 21 as the opposing electrode (negative electrode) via the external circuit (not shown in the figure). On the other hand, in the electrolytic solution layer 23, a hole remaining in the dye 24 oxidizes the ion in the electrolytic solution. The oxidized ion is reduced again on the opposing electrode 21 side while receiving the abovementioned electron. In this way, the travel of the electron between the positive and negative electrodes and the oxidation-reduction reaction accompanied by the travel are repeated; thereby the photoelectric conversion is executed constantly in each photoelectric conversion cell.

Here, in the solar cell 1 according to the embodiment, each of the end-face incident type unit cells 2A to 2D is disposed on the Z-X folded face of the metal sheet 11 that is in a folded form. That is, as described above, the insulating sheet 10 and the metal sheet 11 where the unit cells 2A to 2D are formed are folded in the zigzag form so that the unit cells 2A to 2D are disposed on the Z-X folded faces of the metal sheet 11. Thus, the manufacturing process of the whole solar cell can be simplified in comparison with the case that merely placing a plurality of end-face incident type photoelectric conversion cells of the related art as in Fig.8.

The conductive pattern 11A functioning as the positive electrode of each unit cell and the conductive pattern 11B electrically connected to the opposing electrode 21 functioning as the negative electrode of each unit cell are included in one metal sheet 11. In other words, the metal sheet 11 is composed of two conductive patterns 11A and 11B to connect same electrodes (positive or negative electrode) of two unit cells. Therefore, the extraction structure of the electrode from each unit cell is simplified in comparison with the case that merely placing a plurality of end-face incident type photoelectric conversion cells of the related art as in Fig.8.

As described above, in the present embodiment, a plurality of dye-sensitized unit cells 2A to 2D are disposed on the folded faces (Z-X folded faces) of the metal sheet 11 in the folded form, and the light L that comes from the lateral end face of the stacked structure of each unit cell is photoelectrically converted. Thus, the manufacturing process of the solar cell can be simplified in comparison with the case that merely placing a plurality of end-face incident type unit cells as in Fig.8; thereby the solar cell including a plurality of end-face incident type unit cells can be easily obtained.

The metal sheet 11 is composed of two conductive patterns 11A and 11B to connect same electrodes (positive or negative electrode) of two unit cells. Thus, the extraction structure of the electrode from each unit cell can be simplified, and the set up area for the extraction structure of the electrode can be decreased; thereby an amount of photoelectric conversion per unit area can be enhanced in comparison with the related art.

The insulating sheet 10 and the metal sheet 11 are folded in the zigzag form so that a plurality of unit cells are efficiently disposed; thereby an amount of electric power per unit area can be enhanced.

The conductive pattern 11A as the positive electrode and the opposing electrode 21 as the negative electrode are composed of metal material so that the incident light L1 is prevented from being externally leaked by reflection, and it is reusable; thereby photoelectric conversion efficiency of the incident light L1 can be enhanced.

Hereinbefore, the present invention is described with the embodiment. However, it is not limited to this as various modifications are available.

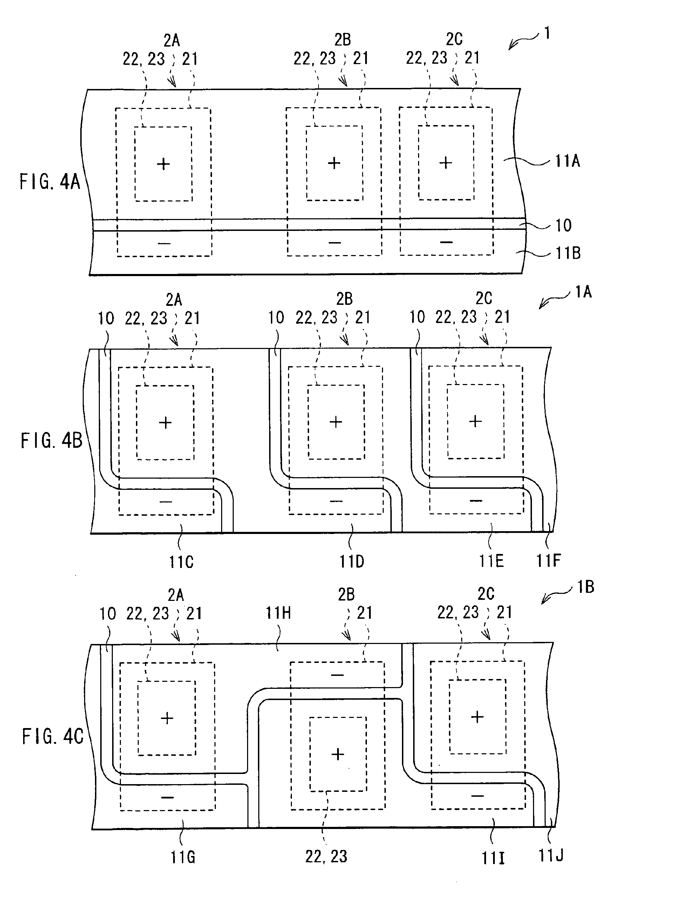

For example in the embodiment, the case of Fig.4A is explained where the positive electrodes (represented by "+") of the unit cells are connected in parallel by the conductive pattern 11A, and the negative electrodes (represented by "-") of the unit cells are connected in parallel by the conductive pattern 11B. However, for example, as in the solar cells 1A and 1B in Figs.4B and 4C, by a plurality of conductive patterns 11C to 11F, and a plurality of conductive patterns 11G to 11J, the opening patterns may be formed to connect a positive electrode and a negative electrode of two adjacent unit cells in series, or using these connections together, a plurality of unit cells may be connected by a combination of series and parallel on the metal sheet 11. In case of the parallel connection, a current value flowing to the external circuit can be increased. On the other hand, in case of the series connection, a voltage value applied to the external circuit can be increased. Therefore, in case of using the combination of the parallel and series connections, the current value and the voltage value extracted from the solar cell can be arbitrarily adjusted according to the allocation of the series and parallel connections.

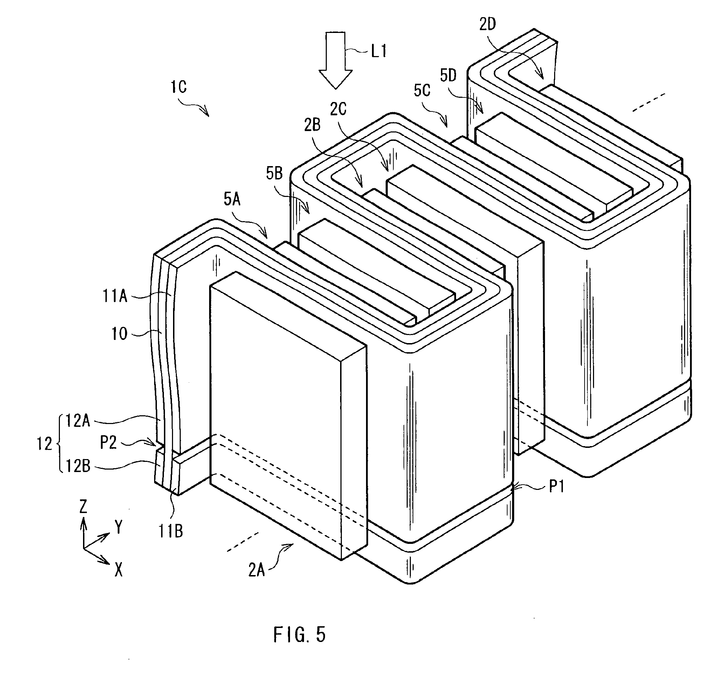

In the embodiment, the case is explained where the metal sheet (the metal sheet 11) is formed on one side of the insulating sheet 10, and the unit cells (the unit cells 2A to 2D) are disposed on the same side of the insulating sheet 10. However, for example as the solar cell 1C in Fig.5, the metal sheets (the metal sheets 11 and 12) may be formed on both sides of the insulating sheet 10. The opening pattern P1 may be provided with two conductive patterns 11A and 11B, and the opening pattern P2 may be provided with two conductive patterns 12A and 12B. The unit cells (the unit cells 2A to 2D and the unit cells 5A to 5D) may be disposed on both sides of the insulating sheet 10. In such a configuration, the amount of the electric power per unit area can be enhanced in comparison with the embodiment.

In the embodiment, the case is explained where the conductive pattern 11A as the positive electrode and the opposing electrode 21 as the negative electrode are composed of metal material, respectively. However, according to a use or an intended purpose of the solar cell, one or both of the conductive pattern 11A and the opposing electrode 21 may be composed of transparent material that is transmissible by the light L1 such as ITO and FTO.

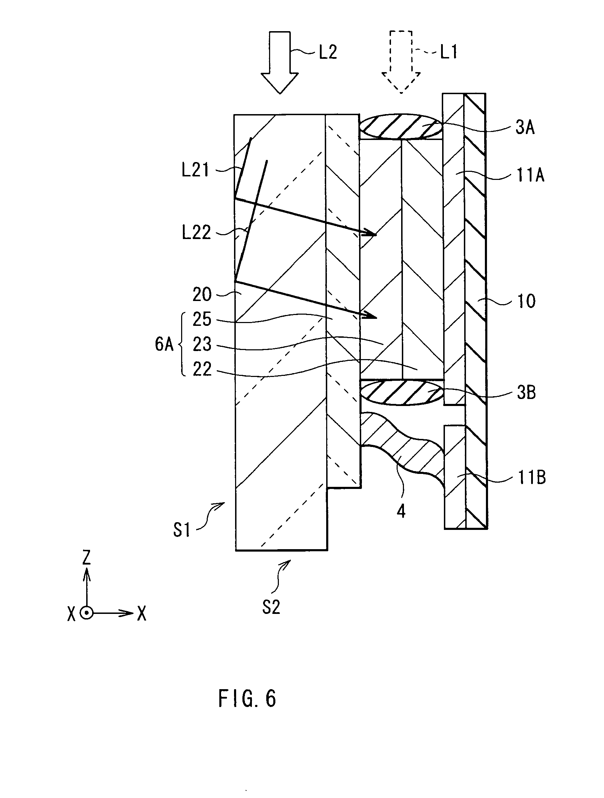

For example as in Fig.6, the opposing electrode 25 (the unit cell 6A) of the transparent electrode may be disposed in substitution of the opposing electrode 21 of the metal electrode. The opposing electrode 25 may be formed on a glass substrate 20 so that the glass substrate 20 functions as a light guide plate. The glass substrate 20 is composed of material with a refractive index higher than air and lower than the material of the opposing electrode. In such a configuration, lights L21 and L22 that are based on the light L2 that comes from the lateral end face of the glass substrate 20 are totally reflected to be led to the dye in the unit cell 6A; thereby they can be used for the photoelectrical conversion. Not only the light L1 that comes from the lateral end face of the stacked structure of the unit cell 6A, but also a large amount of the lights L21 and L22 led into the unit cell 6A by the glass substrate 20 can be used for the photoelectrical conversion; thereby the photoelectric conversion efficiency in the unit cell can be enhanced. Also, if a reflection film reflectable of the lights L21, L22 and the like is provided on the faces except the incident face of the light L2 and the light guide face of the lights L21 and L22, that is, on the faces shown with the reference numerals S1 and S2 in Fig.6 and on the two faces parallel to the drawing sheet, these lights are prevented from being leaked from the glass substrate 20; thereby the photoconductive conversion efficiency can be further enhanced. In case that the light L2 is incident using the glass substrate 20 without using the light L1, the spacers 3A ad 3B may be composed of intransmissible material of the light L1 such as material in which an oxide (such as TiO₂ and ZnO) is mixed into resin.

In the embodiment, the case is explained where the metal sheet is composed of a plurality of conductive patterns. However, the metal sheet may be composed of a single conductive pattern as the positive electrode, and the opposing electrode (negative electrode) is taken from each of the unit cells. In such a configuration, the amount of electric power per unit area is decreased because the extraction structure of the negative electrode is necessarily provided. However, still, it can be easily manufactured in comparison with the

### related art.

In the embodiment, the case is explained where the insulating sheet 10 and the metal sheet are folded in the zigzag form, and a plurality of unit cells are disposed on the Z-X folded faces. However, the unit cells may be additionally (or substitutionally) disposed on the Y-Z folded faces as well. Also, the folded forms of the insulating sheet 10 and the metal sheet are not limited to the zigzag form, and a different folded form may be used.

In the embodiment, the case is explained where the metal sheet is supported by the insulating sheet 10. However, for example, in case the metal sheet is adapted to be thick to increase the intensity, the metal sheet alone may be folded without providing the insulating sheet 10.

In the embodiment, the case is explained where the electrolytic solution is used as the electrolyte. However, solid electrolyte may be used instead.

In the embodiment, the dye-sensitized solar cell is described as an example of the photoelectric conversion device. However, the photoelectric conversion device in the present invention is not limited to the dye-sensitized solar cell. It is also applicable to other photoelectric conversion device such as a light sensor.

Obviously many modifications and variations of the present invention are possible in the light of the above teachings. It is therefore to be understood that within the scope of the appended claims the invention may be practiced otherwise than as specifically described.

## Claims

1. A photoelectric conversion device comprising:
a conductive sheet in a folded form; and
a plurality of dye-sensitized photoelectric conversion cells disposed to have a stacked structure on folded faces of the conductive sheet and photoelectrically converting a light which comes from an lateral end face of the stacked structure.

2. The photoelectric conversion device according to claim 1,
wherein a plurality of conductive patterns are formed on the conductive sheet.

3. The photoelectric conversion device according to claim 2,
wherein an oxide layer, dye held by the oxide layer, an electrolyte layer, and an opposing electrode are stacked in this order on the conductive pattern, and the photoelectric conversion cell is composed of the oxide layer, the dye, the electrolyte layer and the opposing electrode.

4. The photoelectric conversion device according to claim 1 further comprising:
a light guide plate disposed in the stacking direction of each of the photoelectric conversion cells, and leading the incident light which comes from the lateral end face of the light guide plate into each of the photoelectric conversion cells.

5. The photoelectric conversion device according to claim 4 comprising:
a reflection film reflecting the incident light, the reflection film being provided on the faces of the light guide plate except for the incident face through which the incident light comes, and the light guide face through which the incident light is led into the photoelectric conversion cell.

6. The photoelectric conversion device according to claim 1,
wherein the conductive sheet is folded in a zigzag form.

7. A method of manufacturing a photoelectric conversion device comprising the steps of:
forming a plurality of conductive patterns on an insulating sheet;
forming an oxide layer divided into a plurality of regions on the conductive pattern;
supporting dye on each of the oxide layers;
disposing an opposing electrode above each of the oxide layers with an electrolyte layer in between; and
folding the insulating sheet on which the conductive pattern is formed.
